# EUROPEAN PATENT SPECIFICATION

(11) **EP 3 917 091 B1**
(45) Date of publication and mention of the grant of the patent: **09.10.2024**
(21) Application number: 20745647.6
(22) Date of filing: 13.01.2020
(51) Int. Cl.: H04L 51/58, G06F 3/04842, G06Q 50/00, H04L 51/42, H04L 51/04, G06F 3/04883, G06F 3/0488

(54) **MESSAGE SENDING METHOD AND MOBILE TERMINAL**
NACHRICHTENSENDEVERFAHREN UND MOBILES ENDGERÄT
PROCÉDÉ D'ENVOI DE MESSAGE ET TERMINAL MOBILE

(30) Priority: 25.01.2019 CN 201910074925
(43) Date of publication of application: 01.12.2021
(73) Proprietor: VIVO MOBILE COMMUNICATION CO., LTD., Dongguan, Guangdong 523860 (CN)
(72) Inventor: HAN, Jing, Dongguan, Guangdong 523860 (CN)
(74) Representative: Conti, Marco
(86) International application number: PCT/CN2020/071693
(87) International publication number: WO 2020/151516

(56) References cited:
- CN-A- 108 536 365
- CN-A- 108 536 366
- CN-A- 108 762 954
- CN-A- 108 958 593
- CN-A- 109 889 433
- US-A1- 2013 069 969
- US-A1- 2014 349 628
- US-A1- 2015 012 881
- US-A1- 2015 169 208
- US-A1- 2016 205 049

## Description

### TECHNICAL FIELD

Embodiments of the present disclosure relate to the field of communications technologies, and in particular, to a message sending method and a mobile terminal.

### BACKGROUND

With the arrival of the network era, more and more people are used to online chat. For example, a mobile terminal includes chat software, and two users may send a text, a voice, and the like to each other. For another example, in game software, a user may communicate with a teammate by using a text, a voice, and the like.

Using the chat software as an example, when the user uses the chat software to chat, steps that need to be performed include: selecting a chat object, opening a chat window with the chat object, entering a text, a voice, and the like in an input box at the bottom of the chat window, and tapping Send. To switch a chat object, the user needs to close the current chat window, select another chat object, and open a chat window.

It can be learned from the foregoing processes that when the user chat with a plurality of persons at the same time, closing and opening operation actions need to be repeated between a plurality of chat windows. Consequently, user operations are cumbersome, communication efficiency is reduced, and chat experience of the user is affected.

US 20130069969 A1 discloses a mobile terminal and a method for displaying a message thereof.

US 20160205049 A1 discloses a mobile terminal and controlling method thereof.

US 20150169208 A1 discloses a method and an apparatus for managing a message in an electronic device.

### SUMMARY

Embodiments of the present disclosure provide a message sending method and a mobile terminal, as defined in the appended set of claims, to resolve a problem that because a user repeatedly performs closing and opening operation actions between a plurality of chat windows, user operation are cumbersome, communication efficiency is reduced, and chat experience of the user is affected.

In the embodiments of the present disclosure, the user may trigger display of the message editing window on any interface of the mobile terminal through the first input, and write the to-be-sent target message in the displayed message editing window, so that after writing of the target message is completed, the user directly drags the message editing window to the target sending window through the second input, where the target sending window is, for example, a chat window in which a message needs to be sent, and further, after the message editing window arrives at the target sending window, the target message is sent to the target sending window to complete sending. It can be learned from the foregoing processes that, the user may chat with an object corresponding to a chat window without opening any chat window. In particular, when the user chat with a plurality of persons at the same time, the user does not need to sequentially open a plurality of chat windows to send a message but only complete writing of a target message on one interface, and then drag the message editing window to a corresponding chat window, to prevent the user from repeatedly performing closing and opening operation actions between the plurality of chat windows, thereby simplifying a user operation, improving communication efficiency, and optimizing chat experience.

### BRIEF DESCRIPTION OF DRAWINGS

FIG. 1 is a flowchart 1 of a message sending method according to an embodiment of the present disclosure;
FIG. 2 is a schematic operation diagram 1 of a message sending method according to an embodiment of the present disclosure;
FIG. 3 is a flowchart 2 of a message sending method according to an embodiment of the present disclosure;
FIG. 4 is a schematic operation diagram 2 of a message sending method according to an embodiment of the present disclosure;
FIG. 5 is a flowchart 3 of a message sending method according to an embodiment of the present disclosure;
FIG. 6 is a schematic operation diagram 3 of a message sending method according to an embodiment of the present disclosure;
FIG. 7 is a schematic operation diagram 4 of a message sending method according to an embodiment of the present disclosure;
FIG. 8 is a schematic operation diagram 5 of a message sending method according to an embodiment of the present disclosure;
FIG. 9 is a flowchart 4 of a message sending method according to an embodiment of the present disclosure;
FIG. 10 is a block diagram 1 of a mobile terminal according to an embodiment of the present disclosure; and
FIG. 11 is a block diagram 2 of a mobile terminal according to an embodiment of the present disclosure.

### DESCRIPTION OF EMBODIMENTS

The following clearly and completely describes the technical solutions in the embodiments of the present disclosure with reference to the accompanying drawings in the embodiments of the present disclosure. The invention is defined by the scope of the appended claims.

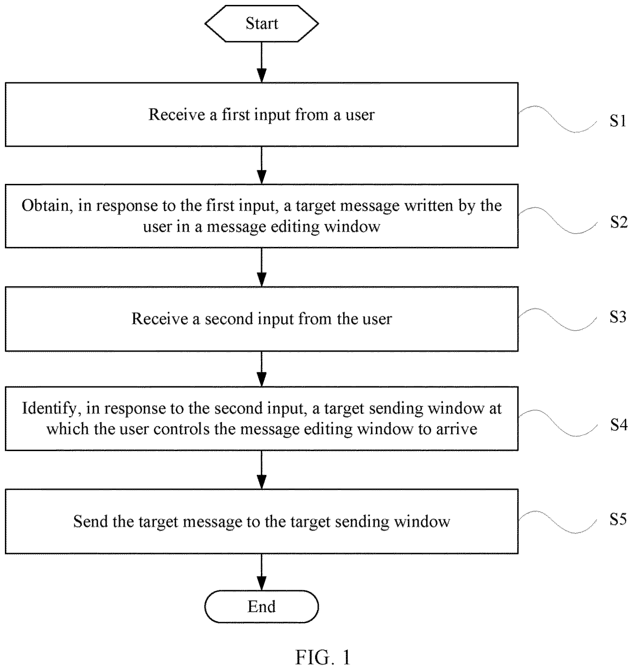

Referring to FIG. 1, FIG. 1 is a flowchart of a message sending method according to an embodiment of the present disclosure. The method is applied to a mobile terminal and includes the following steps.

Step S 1: Receive a first input from a user.

A main function implemented by the method in this embodiment is to send a message. The method includes two processes: message pre-editing and message sending. Message pre-editing means that the user pre-edits a message on any interface of the mobile terminal, and message sending means that the user drags the pre-edited message to a window to complete sending.

The first input is used to complete message editing on any interface.

Correspondingly, the first input includes a series of operations such as tapping, sliding, and pressing.

For example, the user triggers display of a message editing window on any interface through the first input, so that the user writes a target message in the message editing window. Herein, the operation of triggering display of the message editing window and the operation of writing the target message are all included in the first input.

Step S2: Obtain, in response to the first input, a target message written by the user in a message editing window.

Content of the target message is obtained in response to an operation input of writing the target message in the message editing window by the user.

Step S3: Receive a second input from the user.

The second input is used to drag a pre-edited message to a window to complete sending.

Correspondingly, the second input includes a series of operations such as tapping, sliding, pressing, and dragging.

For example, any interface in which the user is located includes at least one window. Generally, a window list is displayed on a main interface of chat software, and the window list includes a plurality of chat windows. When the mobile terminal displays the main interface of the chat software, the user may trigger display of the message editing window through the first input, and write the target message in the message editing window through the first input. Further, the user drags the message editing window to one of the chat windows, and confirms that the target message of the message editing window is sent to the chat window. Herein, the operation of dragging the message editing window and the operation of confirming sending are all included in the second input.

Specifically, after the user drags the message editing window to one of the chat windows, a "Send" option is displayed. The user taps the "Send" option to confirm sending. Tap the "Send" option herein is an operation of confirming sending.

Step S4: Identify, in response to the second input, a target sending window at which the user controls the message editing window to arrive.

Optionally, the second input includes the operation in which the user drags the message editing window to the target sending window, so that in response to the second input, the user controls, based on a drag track of the user in the second input, the message editing window to move to the target sending window on an interface based on the drag track.

Further, after the message editing window arrives at the target sending window, the target sending window is identified, and the identified target sending window is highlighted, to facilitate identification by the user.

Step S5: Send the target message to the target sending window.

In this step, the second input further includes an operation of confirming sending by the user, to send the target message to the target sending window in response to the second input.

For example, based on the highlighted target sending window, the user may confirm the target sending window, and then release a finger from a screen, and send the target message to the target sending window to complete sending.

In this embodiment of the present disclosure, the user may trigger display of the message editing window on any interface of the mobile terminal through the first input, and write the to-be-sent target message in the displayed message editing window, so that after writing of the target message is completed, the user directly drags the message editing window to the target sending window through the second input, where the target sending window is, for example, a chat window in which a message needs to be sent, and further, after the message editing window reaches the target sending window, the target message is sent to the target sending window to complete sending.

It can be learned from the foregoing processes that, the user may chat with an object corresponding to a chat window without opening any chat window. In particular, when the user chat with a plurality of persons at the same time, the user does not need to sequentially open a plurality of chat windows to send a message but only complete writing of a target message on one interface, and then drag the message editing window to a corresponding chat window, to prevent the user from repeatedly performing closing and opening operation actions between the plurality of chat windows, thereby simplifying a user operation, improving communication efficiency, and optimizing chat experience.

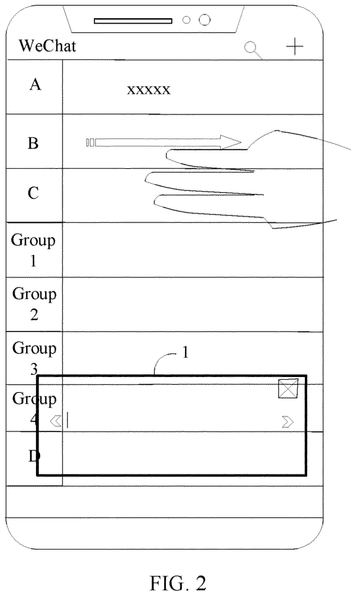

For example, as shown in FIG. 2, the mobile terminal displays a main interface of chat software, A and B are chat objects, and each chat object corresponds to one chat window. Therefore, the user triggers display of the message editing window through the first input on this interface, so that the user writes the target message in the message editing window, and then drags the message editing window to any chat window. It can be learned that, on the main interface of the chat software, the user can view a message sent by each chat object, and directly complete message editing and sending on the main interface, without tapping to open any chat window for a separate reply. In this way, not only user operations are simplified, but also most chat content in the chat window is not exposed on a screen line, especially in a public use scenario, so that privacy of the user can be effectively protected.

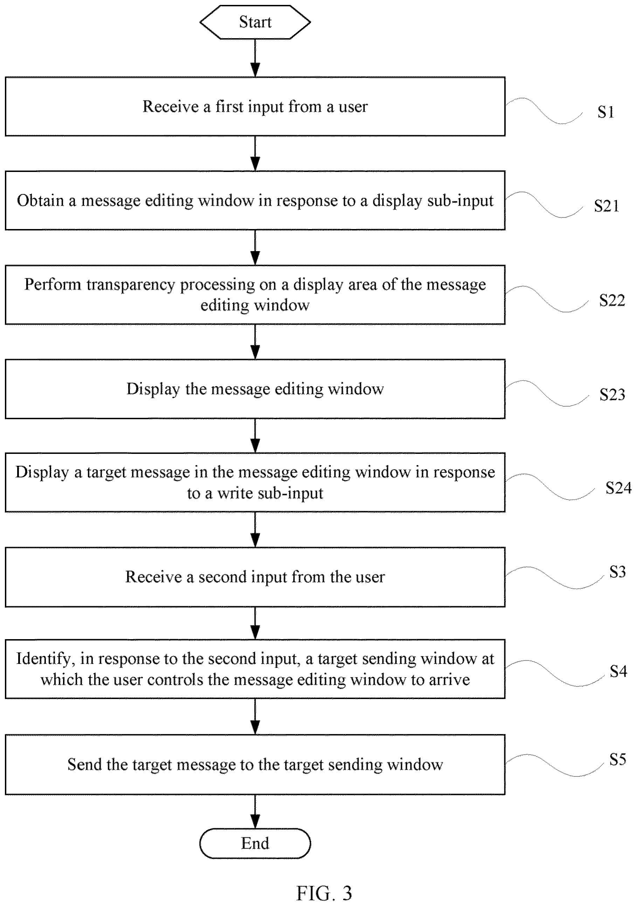

Based on the embodiment shown in FIG. 1, FIG. 3 is a flowchart of a message sending method according to an embodiment of the present disclosure. The first input includes at least a display sub-input of the message editing window.

Step S2 includes:
Step S21: Obtain the message editing window in response to the display sub-input.

Optionally, the display sub-input includes a touch gesture action, an air gesture action, and the like on the screen.

Referring to FIG. 2, for example, the user triggers display of the message editing window on any interface through a touch gesture action of sliding rightwards by three fingers.

In this step, before the message editing window is displayed, the message editing window is first obtained.

Step S22: Perform transparency processing on a display area of the message editing window.

Before the message editing window is displayed, transparency processing is performed on the display area of the message editing window. In this way, the message editing window displayed on the interface can be prevented from occluding display content on the interface.

Step S23: Display the message editing window.

Optionally, the message editing window may be displayed on the interface in a pop-up form. Further, the popped-up message editing window is displayed in a hover box, the hovering message editing window is independent of the current interface, and the user may drag the message editing window to move freely in the current interface.

Optionally, the message editing window may be an applet, a widget, or the like. Referring to FIG. 2, for example, the message editing window is a note widget, so that the user can call out the note widget by using through a touch gesture action of sliding rightwards by three fingers, so that the note widget displays a note hover box 1 on an interface, and the note hover box 1 in the note widget may be used as the message editing window. The note hover box 1 is displayed in a transparent hovering state.

In this embodiment, the user may trigger display of the message editing window in any interface through the display sub-input, where the display sub-input is not limited to a simple air gesture action and a touch gesture action. The operation of triggering display of the message editing window by the user is simple and convenient, and the message editing window can be displayed anytime, to complete a message sending function in this embodiment. Further, the message editing window is processed before display, and is displayed on the interface in a transparent hovering state, to prevent the message editing window from occluding display content on the interface.

Based on the foregoing embodiment, FIG. 3 is also a flowchart of a message sending method according to an embodiment of the present disclosure. The first input includes at least a write sub-input of the target message.

Step S2 further includes:
Step S24: Display the target message in the message editing window in response to the write sub-input.

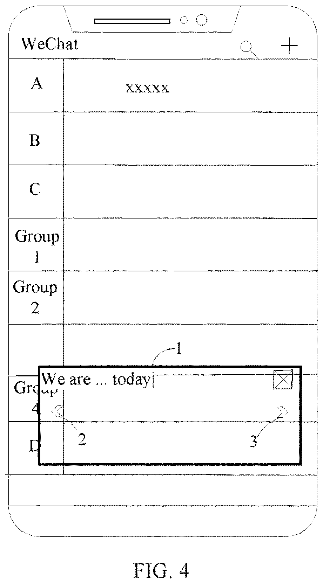

Referring to FIG. 4, after step S23, the user may write the target message in the message editing window, that is, complete the write sub-input, so that in response to the write sub-input, the user displays, in the message editing window in real time, the target message written by the user through the write sub-input.

In a process in which the user performs the write sub-input, a size of the display area of the message editing window is adjusted based on content of the target message written by the user until all content of the target message is displayed in the display area of the message editing window.

It should be noted that in the related art, after opening a chat window, the user writes message content in an input box at the bottom of the chat window. Generally, due to a size limitation of the chat window, an area of the input box is relatively small, and message content written by the user is relatively long, the written message content is not displayed for privacy, thereby making it inconvenient for the user to view all message content. In this case, most users write messages in advance in editing software (such as memo and note software), and then write the messages into the input box by copying and pasting. In this way, the users are switched between a plurality of pieces of software, and operations are cumbersome.

In this embodiment, the display area of the message editing window may vary, and changes with message content written by the user in real time. For example, when the user writes less message content, the display area of a message editing window is smaller, to prevent a large display area from affecting a current interface. For another example, as the message content written by the user increases, the display area of the message editing window gradually increases, to ensure that the user can see all written content in the display area of the message editing window at any time. In this way, the user can adjust written message content in real time, and the size of the display area of the message editing window is automatically adjusted without the user's operation, so that user operations are simplified.

Further, to prevent an excessively large display area of the message editing window from affecting the current interface, or to prevent the display area of the message editing window from being greater than a display area of a display screen, a maximum value of an area of the display area of the message editing window may be preset. When the display area of the message editing window is adjusted to the maximum value of the area, an adjustment change is stopped.

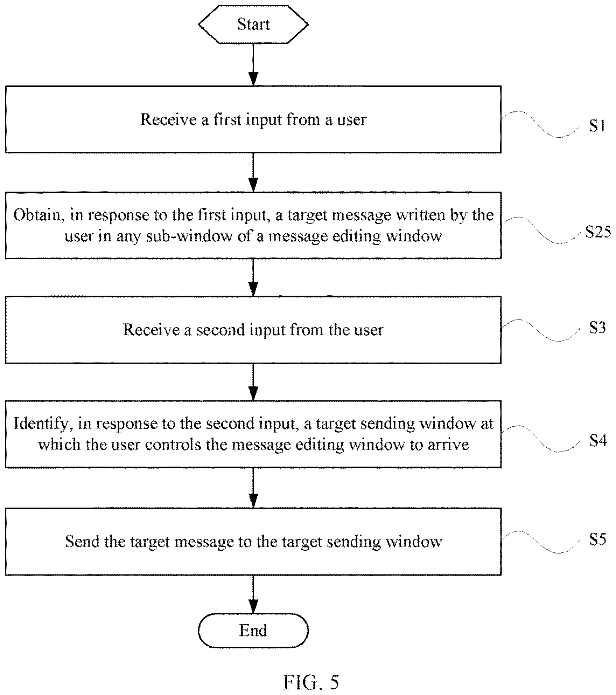

Based on the embodiment shown in FIG. 1, FIG. 5 is a flowchart of a message sending method according to an embodiment of the present disclosure. Step S2 includes:
Step S25: Obtain, in response to the first input, a target message written by the user in any sub-window of the message editing window.

The message editing window includes a plurality of sub-windows, and each sub-window is used by the user to write an independent target message. Referring to FIG. 4, in response to the display sub-input in the first input, a first sub-window of the message editing window is displayed on the current interface, and an indication arrow 2 of a previous sub-window and an indication arrow 3 of a next sub-window are respectively displayed on both sides of the first sub-window. After a first sub-window of a message editing window 1 is displayed, the first input further includes an operation of selecting a sub-window by the user, for example, the user taps the indication arrow 2 of the previous sub-window or the indication arrow 3 of the next sub-window, to respond to the operation of selecting the sub-window by the user, and the message editing window 1 is displayed as the corresponding previous sub-window or next sub-window.

In actual application, after the user calls out the message editing window through the first input, the first sub-window may be first displayed. After writing the target message in the first sub-window, the user taps the indicator arrow 3 of the next sub-window, and the message editing window 1 switches to display the next sub-window. The user continues to write a next target message in the next sub-window. Alternatively, the user taps the indication arrow 2 of the previous sub-window, and the message editing window 1 switches to display the previous sub-window, where the written target message is displayed in the previous sub-window, and the user may edit, view, and the like the target message in the previous sub-window. The user may switch a plurality of sub-windows for display, and the plurality of sub-windows do not affect each other. Blank content may be displayed on a sub-window in which no message is written.

In this step, the user may enable, through the first input, the message editing window to display a sub-window in which the target message is written, so that the mobile terminal obtains the target message currently displayed in the message editing window, and sends the obtained target message to the target sending window after the message editing window is dragged to the target sending window.

In this embodiment, the message editing window includes a plurality of sub-windows, and the user may write a plurality of target messages in advance in the message editing window, to separately send the plurality of target messages to corresponding target sending windows. It can be learned that when the user uses chat software, a plurality of chat windows do not need to be opened repeatedly. The user may view messages of the plurality of chat windows on an interface in which a chat window list is located, and edit a plurality of messages. For example, in FIG. 4, the user may edit a message of a friend A and a message of a friend B while viewing messages of a group 1 and a group 2. In view of the above, in this embodiment, a requirement of the user to chat with a plurality of persons on a same interface can be met, and the user can be prevented from switching between a plurality of chat windows, so that user operations are simplified, and communication efficiency is improved.

In addition, in one case of the related art, when the user uses chat software, if the user edits message content in an input box of a chat window, the input box is enabled, and a terminal of the other party prompts "Tying ...". Sometimes, the user may only write or delete, or think about organizing a language, and does not want the other party to see the state of "Tying ....". In this embodiment, the user does not need to open a chat window, and therefore, an input box does not need to be enabled, thereby effectively resolving the foregoing problem and improving user experience.

In another case of the related art, if the user is in a chat window, for some special reasons, for example, chat content is relatively important, or a red packet is being snatched, the user cannot close a current chat window in a timely manner. As a result, the user cannot view a message in another chat window in a timely manner. In this embodiment, the user does not need to open any chat window, and may flexibly view messages of a plurality of chat windows on a primary interface, and send messages separately based on the plurality of chat windows, thereby effectively resolving the foregoing problem and improving user experience.

For ease of detailed description, another embodiment of the present disclosure is used as an example for specific explanation, to describe an implementation process of message sending in this embodiment.

In this embodiment, the second input includes a touching and holding operation performed by the user on the message editing window, and in response to the touching and holding operation performed by the user on the message editing window, the message editing window is activated and changes from a still state to a movable state. In this way, a phenomenon that the message editing window is incorrectly moved due to a misoperation of the user can be avoided.

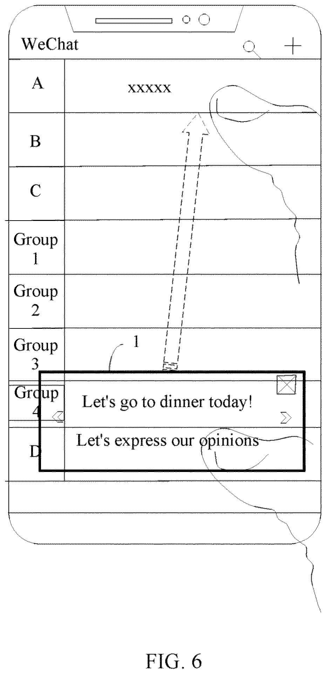

Referring to FIG. 6, further, after the message editing window is activated and the user continuously performs a touching and holding operation on the message editing window, the second input further includes a drag operation performed by the user on the message editing window. The message editing window is moved on an interface based on a drag track (indicated by an arrow) of the user in response to the drag operation performed by the user on the message editing window. The drag operation performed by the user on the message editing window is only for a target message currently displayed in the window.

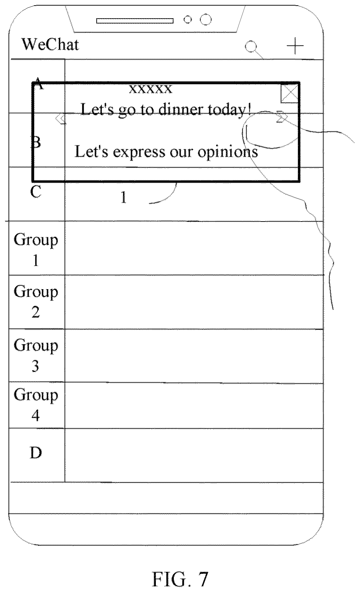

Referring to FIG. 7, the target sending window is a "chat window with A". When the user drags the message editing window to the "chat window with A" based on the drag operation on the message editing window, the "chat window with A" is highlighted to remind the user.

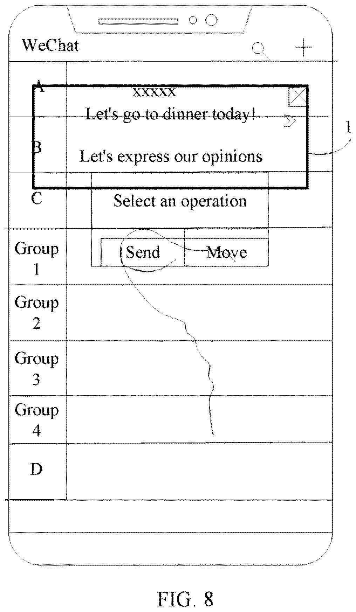

Referring to FIG. 8, in this case, the user stops the drag operation on the message editing window and performs a touching and holding operation on the message editing window to pop up a selection box, where "Send" and "Move" options are displayed in the selection box. The second input further includes an operation of tapping the "Send" option by the user, and successfully sends the target message to the corresponding "chat window with A" in response to the operation of tapping the "Send" option by the user, and the message editing window returns to an initial display position.

Alternatively, the second input further includes an operation of tapping the "Move" option by the user, the user does not send the target message in response to the operation of tapping the "Move" option by the user, and keeps the message editing window at a current position. Herein, the operation of tapping the "Move" option by the user can be used to move the message editing window without sending a message.

In this embodiment, the second input is further explained in detail. Before the target message is sent, a service for confirming sending is added to the user, to avoid a missending event of the user. Compared with the related art, when the user edits a message in an input box of a chat window, missending is often caused by a mistouching of a "Send" button. This embodiment effectively resolves this problem and further improves user experience. In addition, in a case that the user does not select to send, a service of moving the mobile message editing window is further provided for the user, so that the user can move the message editing window randomly on an interface.

In another embodiment of the present disclosure, if a target message in written in only one of a plurality of sub-windows in the message editing window, the message editing window automatically exits after the target message is successfully sent. If target messages are separately written in at least two sub-windows, after a current target message is successfully sent, the message editing window automatically switches to a next sub-window to display an unsent target message.

In more embodiments, a close button is displayed on the message editing window, and the user taps the close button to exit the message editing window. Alternatively, the user may trigger the message editing window to exit through an air gesture action or a touch gesture action.

In particular, the message sending method in this embodiment of the present disclosure is applied to a single-screen mobile terminal, a dual-screen mobile terminal, and more mobile terminals. In the dual-screen mobile terminal, the user may perform message pre-editing and message sending on one screen, or may perform message pre-editing and message sending on two screens, to make full use of a feature of the dual-screen mobile terminal.

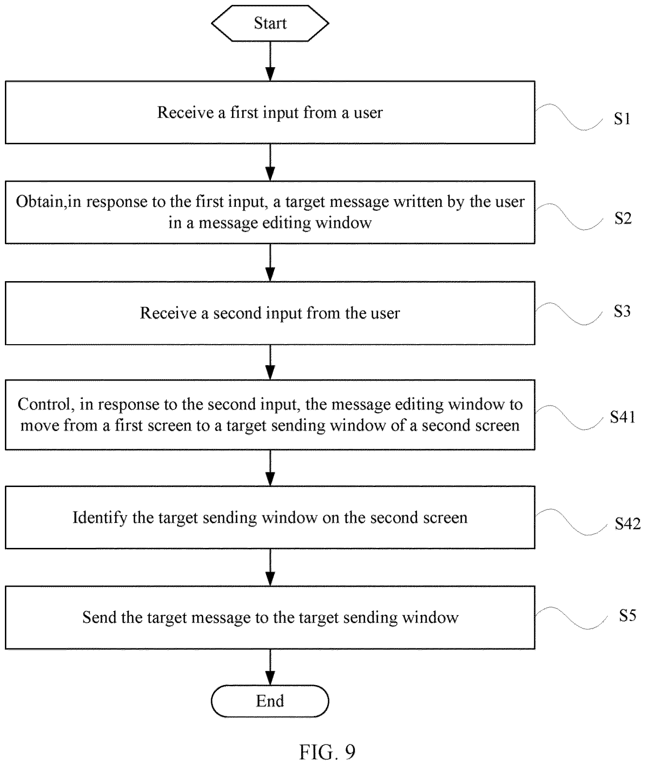

Based on the embodiment shown in FIG. 1, FIG. 9 is a flowchart of a message sending method according to an embodiment of the present disclosure. The method is applied to a dual-screen mobile terminal, and the mobile terminal includes a first screen and a second screen.

Step S4 includes:
Step S41: Control, in response to the second input, the message editing window to move from the first screen to a target sending window of the second screen.
Step S42: Identify the target sending window of the second screen.

In this embodiment, the user may trigger display of the message editing window on any interface of the first screen through the first input, and the message editing window may be displayed in any screen. After completing editing of the target message in the message editing window, the user may drag the message editing window from one screen to a target sending window of another screen to complete sending.

For example, the dual-screen mobile terminal includes two screens, and the two screens are a primary screen and a secondary screen. Because the primary screen is a screen with higher use frequency, the user may trigger display of the message editing window on the primary screen through the first input, and the message editing window may be optionally displayed on the secondary screen. This prevents the message editing window from interfering with the user's operation on the primary screen, so that the user can edit the target message in a message editing window of the secondary screen. After the user completes editing, the message editing window is dragged to a target sending window of the primary screen to complete sending.

In particular, when a game interface is displayed on the primary screen, a game screen is occluded if the user edits a message on the game interface, and a message input box of the game interface is too small. In addition, the user can only edit a message on a game side, thereby affecting game experience of the user. In this embodiment, the user may write a plurality of commonly used messages in advance in the message editing window displayed on the secondary screen, and when a message needs to be sent, the user directly drags the message editing window to a corresponding position on the primary screen to complete sending, thereby ensuring both game experience and message sending experience.

The dual-screen mobile terminal includes a collapsible screen and a flexible screen.

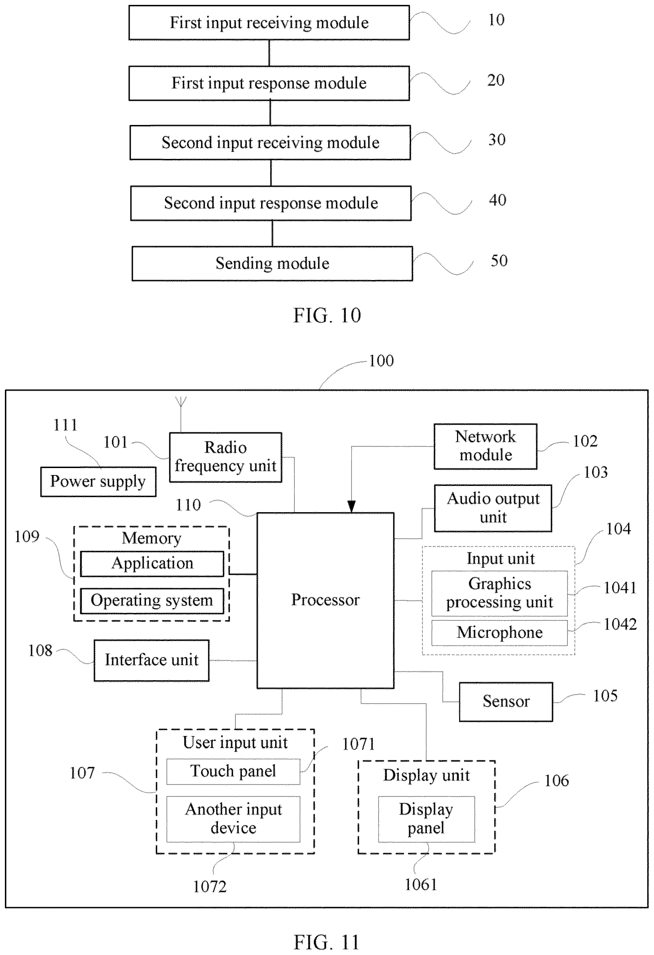

FIG. 10 is a block diagram of a mobile terminal according to another embodiment of the present disclosure. The mobile terminal includes:
a first input receiving module 10, configured to receive a first input from a user;
a first input response module 20, configured to obtain, in response to the first input, a target message written by the user in a message editing window;
a second input receiving module 30, configured to receive a second input from the user;
a second input response module 40, configured to identify, in response to the second input, a target sending window at which the user controls the message editing window to arrive; and
a sending module 50, configured to send the target message to the target sending window.

In this embodiment of the present disclosure, the user may trigger display of the message editing window on any interface of the mobile terminal through the first input, and write the to-be-sent target message in the displayed message editing window, so that after writing of the target message is completed, the user directly drags the message editing window to the target sending window through the second input, where the target sending window is, for example, a chat window in which a message needs to be sent, and further, after the message editing window reaches the target sending window, the target message is sent to the target sending window to complete sending. It can be learned from the foregoing processes that, the user may chat with an object corresponding to a chat window without opening any chat window. In particular, when the user chat with a plurality of persons at the same time, the user does not need to sequentially open a plurality of chat windows to send a message but only complete writing of a target message on one interface, and then drag the message editing window to a corresponding chat window, to prevent the user from repeatedly performing closing and opening operation actions between the plurality of chat windows, thereby simplifying a user operation, improving communication efficiency, and optimizing chat experience.

Optionally, the first input includes at least a display sub-input of the message editing window; and
the first input response module 20 includes:
a display sub-input response unit, configured to obtain the message editing window in response to the display sub-input;
a processing unit, configured to perform transparency processing on a display area of the message editing window; and
a display unit, configured to display the message editing window.

Optionally, the first input further includes at least a write sub-input of the target message; and
the first input response module 20 further includes:
a write sub-input response unit, configured to display the target message in the message editing window in response to the write sub-input, where
in a process in which the user performs the write sub-input, a size of the display area of the message editing window is adjusted based on content of the target message written by the user until all content of the target message is displayed in the display area of the message editing window.

Optionally, the first input response module 20 includes:
a sub-window writing unit, configured to obtain, in response to the first input, a target message written by the user in any sub-window of the message editing window.

Optionally, the mobile terminal is a dual-screen mobile terminal, and the mobile terminal includes a first screen and a second screen; and
the second input response module 40 includes:
a cross-screen moving unit, configured to control, in response to the second input, the message editing window to move from the first screen to a target sending window of the second screen; and
a window identifying unit, configured to identify the target sending window of the second screen.

The mobile terminal provided in this embodiment of the present disclosure can implement the processes implemented by the mobile terminal in the method embodiments in FIG. 1 to FIG. 9. To avoid repetition, details are not described herein again.

FIG. 11 is a schematic structural diagram of hardware of a mobile terminal according to the embodiments of the present disclosure. A mobile terminal 100 includes but is not limited to components such as a radio frequency unit 101, a network module 102, an audio output unit 103, an input unit 104, a sensor 105, a display unit 106, a user input unit 107, an interface unit 108, a memory 109, a processor 110, and a power supply 111. A person skilled in the art may understand that the structure of the mobile terminal shown in FIG. 11 constitutes no limitation on the mobile terminal, and the mobile terminal may include more or fewer parts than those shown in the figure, or combine some parts, or have a different part arrangement. In this embodiment of the present disclosure, the mobile terminal includes, but is not limited to, a mobile phone, a tablet computer, a laptop computer, a palmtop computer, an in-vehicle terminal, a wearable device, a pedometer, and the like.

The user input unit 107 is configured to: receive a first input from a user; and receive a second input from the user; and
the processor 110 is configured to: obtain, in response to the first input, a target message written by the user in a message editing window; identify, in response to the second input, a target sending window at which the user controls the message editing window to arrive; and send the target message to the target sending window.

In this embodiment of the present disclosure, the user may trigger display of the message editing window on any interface of the mobile terminal through the first input, and write the to-be-sent target message in the displayed message editing window, so that after writing of the target message is completed, the user directly drags the message editing window to the target sending window through the second input, where the target sending window is, for example, a chat window in which a message needs to be sent, and further, after the message editing window reaches the target sending window, the target message is sent to the target sending window to complete sending. It can be learned from the foregoing processes that, the user may chat with an object corresponding to a chat window without opening any chat window. In particular, when the user chat with a plurality of persons at the same time, the user does not need to sequentially open a plurality of chat windows to send a message but only complete writing of a target message on one interface, and then drag the message editing window to a corresponding chat window, to prevent the user from repeatedly performing closing and opening operation actions between the plurality of chat windows, thereby simplifying a user operation, improving communication efficiency, and optimizing chat experience.

It should be understood that, in this embodiment of the present disclosure, the radio frequency unit 101 may be configured to receive and send information or a signal in a call process. Specifically, after receiving downlink data from a base station, the radio frequency unit 101 sends the downlink data to the processor 110 for processing. In addition, the radio frequency unit 101 sends uplink data to the base station. Usually, the radio frequency unit 101 includes but is not limited to an antenna, at least one amplifier, a transceiver, a coupler, a low noise amplifier, a duplexer, and the like. In addition, the radio frequency unit 101 may communicate with a network and another device through a wireless communication system.

The mobile terminal provides wireless broadband Internet access for the user by using the network module 102, for example, helping the user to send and receive an e-mail, browse a web page, and access streaming media.

The audio output unit 103 may convert audio data received by the radio frequency unit 101 or the network module 102 or stored in the memory 109 into an audio signal and output the audio signal as a sound. In addition, the audio output unit 103 may further provide an audio output (for example, a call signal received voice, or a message received voice) related to a specific function implemented by the mobile terminal 100. The audio output unit 103 includes a speaker, a buzzer, a telephone receiver, and the like.

The input unit 104 is configured to receive an audio signal or a video signal. The input unit 104 may include a graphics processing unit (Graphics Processing Unit, GPU) 1041 and a microphone 1042. The graphics processing unit 1041 processes image data of a static picture or a video obtained by an image capturing apparatus (for example, a camera) in a video capturing mode or an image capturing mode. A processed image frame may be displayed on the display unit 106. The image frame processed by the graphics processing unit 1041 may be stored in the memory 109 (or another storage medium) or sent via the radio frequency unit 101 or the network module 102. The microphone 1042 may receive a sound and can process such sound into audio data. Processed audio data may be converted, in a call mode, into a format that can be sent to a mobile communication base station by using the radio frequency unit 101 for output.

The mobile terminal 100 may further include at least one sensor 105 such as an optical sensor, a motion sensor, or another sensor. Specifically, the optical sensor includes an ambient light sensor and a proximity sensor. The ambient light sensor may adjust luminance of the display panel 1061 based on brightness of ambient light, and the proximity sensor may disable the display panel 1061 and/or backlight when the mobile terminal 100 approaches an ear. As a type of the motion sensor, an accelerometer sensor may detect an acceleration value in each direction (generally, three axes), and detect a value and a direction of gravity when the accelerometer sensor is static, and may be used in an application for recognizing a mobile terminal posture (such as screen switching between landscape and portrait modes, a related game, or magnetometer posture calibration), a function related to vibration recognition (such as a pedometer or a knock), and the like. The sensor 105 may further include a fingerprint sensor, a pressure sensor, an iris sensor, a molecular sensor, a gyroscope, a barometer, a hygrometer, a thermometer, an infrared sensor, and the like. Details are not described herein.

The display unit 106 is configured to display information entered by a user or information provided for a user. The display unit 106 may include a display panel 1061. The display panel 1061 may be configured in a form of a liquid crystal display (Liquid Crystal Display, LCD), an organic light-emitting diode (Organic Light-Emitting Diode, OLED), or the like.

The user input unit 107 may be configured to: receive digit or character information that is input, and generate key signal input related to user setting and function control of the mobile terminal. Specifically, the user input unit 107 includes a touch panel 1071 and another input device 1072. The touch panel 1071 is also referred to as a touchscreen, and may collect a touch operation performed by a user on or near the touch panel 1071 (such as an operation performed by a user on the touch panel 1071 or near the touch panel 1071 by using any proper object or accessory, such as a finger or a stylus). The touch panel 1071 may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch point coordinates, and sends the touch point coordinates to the processor 110, and can receive and execute a command sent by the processor 110. In addition, the touch panel 1071 may be of a resistive type, a capacitive type, an infrared type, a surface acoustic wave type, or the like. The user input unit 107 may include another input device 1072 in addition to the touch panel 1071. Specifically, the another input device 1072 may include but is not limited to a physical keyboard, a functional button (such as a volume control button or a power on/off button), a trackball, a mouse, and a joystick. Details are not described herein.

Further, the touch panel 1071 may cover the display panel 1061. When detecting the touch operation on or near the touch panel 1071, the touch panel 1071 transmits the touch operation to the processor 110 to determine a type of a touch event, and then the processor 110 provides corresponding visual output on the display panel 1061 based on the type of the touch event. In FIG. 11, although the touch panel 1071 and the display panel 1061 are used as two independent parts to implement input and output functions of the mobile terminal, in some embodiments, the touch panel 1071 and the display panel 1061 may be integrated to implement the input and output functions of the mobile terminal. Details are not described herein.

The interface unit 108 is an interface for connecting an external apparatus with the mobile terminal 100. For example, the external apparatus may include a wired or wireless headset port, an external power supply (or a battery charger) port, a wired or wireless data port, a memory card port, a port for connecting an apparatus having an identification module, an audio input/output (I/O) port, a video I/O port, a headset port, and the like. The interface unit 108 may be configured to receive input (for example, data information and power) from an external apparatus and transmit the received input to one or more elements in the mobile terminal 100 or may be configured to transmit data between the mobile terminal 100 and an external apparatus.

The memory 109 may be configured to store a software program and various data. The memory 109 may mainly include a program storage area and a data storage area. The program storage area may store an operating system, an application required by at least one function (such as a sound play function or an image play function), and the like. The data storage area may store data (such as audio data or an address book) created based on use of the mobile phone, and the like. In addition, the memory 109 may include a high-speed random-access memory, or may include a nonvolatile memory, for example, at least one disk storage device, a flash memory, or another volatile solid-state storage device.

The processor 110 is a control center of the mobile terminal, and is connected to all parts of the entire mobile terminal by using various interfaces and lines, and performs various functions of the mobile terminal and processes data by running or executing the software program and/or the module that are stored in the memory 109 and invoking the data stored in the memory 109, to implement overall monitoring on the mobile terminal. The processor 110 may include one or more processing units. Optionally, the processor 110 may integrate an application processor and a modem processor. The application processor mainly processes an operating system, a user interface, an application, and the like. The modem processor mainly processes wireless communication. It may be understood that, alternatively, the modem processor may not be integrated into the processor 110.

The mobile terminal 100 may further include a power supply 111 (such as a battery) that supplies power to each component. Optionally, the power supply 111 may be logically connected to the processor 110 by using a power supply management system, to implement functions such as charging, discharging, and power consumption management by using the power supply management system.

In addition, the mobile terminal 100 includes some function modules not shown, and details are not described herein.

Optionally, an embodiment of the present disclosure further provides a mobile terminal, including a processor 110, a memory 109, and a computer program that is stored in the memory 109 and that can run on the processor 110. When the processor 110 executes the computer program, the foregoing processes of the message sending method embodiment are implemented and a same technical effect can be achieved. To avoid repetition, details are not described herein again.

An embodiment of the present disclosure further provides a computer-readable storage medium. The computer-readable storage medium stores a computer program, and when a processor executes the computer program, the foregoing processes of the message sending method embodiment are implemented and a same technical effect can be achieved. To avoid repetition, details are not described herein again. The computer-readable storage medium may be a read-only memory (Read-Only Memory, ROM), a random-access memory (Random Access Memory, RAM), a magnetic disk, a compact disc, or the like.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In the absence of more restrictions, an element defined by the statement "including a..." does not exclude another same element in a process, method, article, or apparatus that includes the element.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of the present disclosure essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of the present disclosure.

The embodiments of the present disclosure are described above with reference to the accompanying drawings, but the present disclosure is not limited to the foregoing specific implementations. The foregoing specific implementations are merely schematic instead of restrictive.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In the absence of more restrictions, an element defined by the statement "including a..." does not exclude another same element in a process, method, article, or apparatus that includes the element.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of the present disclosure essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of the present disclosure.

The embodiments of the present disclosure are described above with reference to the accompanying drawings, but the present disclosure is not limited to the foregoing specific implementations. The foregoing specific implementations are merely schematic instead of restrictive.

## Claims

1. A message sending method, applied to a mobile terminal and **characterized by** comprising:
receiving (S 1) a first input from a user;
obtaining (S2), in response to the first input, a target message written by the user in a message editing window; wherein the message editing window comprises a plurality of sub-windows, and each sub-window of the plurality of sub-windows is used by the user to write an independent target message; wherein the target message is an editable message to be sent, and the target message is displayed in the message editing window;
receiving (S3) a second input from the user;
identifying (S4), in response to the second input, a target sending window at which the user controls the message editing window to arrive; and
sending (S5) the target message to the target sending window;
wherein the first input comprises at least a display sub-input of the message editing window; and
the obtaining (S2), in response to the first input, a target message written by the user in a message editing window comprises:
obtaining (S21) the message editing window in response to the display sub-input;
performing (S22) transparency processing on a display area of the message editing window, to enable the display area of the message editing window to be displayed in a transparent hovering state; and
displaying (S23) the message editing window in the transparent hovering state;
wherein the first input further comprises an operation of selecting a sub-window by the user, and the displaying (S23) the message editing window comprises:
in response to the display sub-input in the first input, displaying a first sub-window of the message editing window on a current interface, and displaying an indication arrow of a previous sub-window and an indication arrow of a next sub-window respectively on both sides of the first sub-window;
displaying the message editing window as the corresponding previous sub-window or next sub-window in response to the operation of selecting the sub-window by the user.

2. The method according to claim 1, wherein the first input comprises at least a write sub-input of the target message; and
the obtaining (S2), in response to the first input, a target message written by the user in a message editing window further comprises:
displaying (S24) the target message in the message editing window in response to the write sub-input, wherein
in a process in which the user performs the write sub-input, a size of the display area of the message editing window is adjusted based on content of the target message written by the user until all content of the target message is displayed in the display area of the message editing window.

3. The method according to claim 1, wherein the obtaining (S2), in response to the first input, a target message written by the user in a message editing window comprises:
obtaining (S25), in response to the first input, a target message written by the user in any sub-window of the message editing window.

4. The method according to claim 1, wherein the method is applied to a dual-screen mobile terminal, and the mobile terminal comprises a first screen and a second screen; and
the identifying (S4), in response to the second input, a target sending window at which the user controls the message editing window to arrive comprises:
controlling (S41), in response to the second input, the message editing window to move from the first screen to a target sending window of the second screen; and
identifying (S42) the target sending window of the second screen.

5. A mobile terminal, **characterized by** comprising:
a first input receiving module (10), configured to receive a first input from a user;
a first input response module (20), configured to obtain, in response to the first input, a target message written by the user in a message editing window; wherein the message editing window comprises a plurality of sub-windows, and each sub-window of the plurality of sub-windows is used by the user to write an independent target message; wherein the target message is an editable message to be sent, and the target message is displayed in the message editing window;
a second input receiving module (30), configured to receive a second input from the user;
a second input response module (40), configured to identify, in response to the second input, a target sending window at which the user controls the message editing window to arrive; and
a sending module (50), configured to send the target message to the target sending window;
wherein the first input comprises at least a display sub-input of the message editing window; and
the first input response module (20) comprises:
a display sub-input response unit, configured to obtain the message editing window in response to the display sub-input;
a processing unit, configured to perform transparency processing on a display area of the message editing window, to enable the display area of the message editing window to be displayed in a transparent hovering state; and
a display unit, configured to display the message editing window in the transparent hovering state;
wherein the first input further comprises an operation of selecting a sub-window by the user, and the processing unit is further configured to:
in response to the display sub-input in the first input, display a first sub-window of the message editing window on a current interface, and display an indication arrow of a previous sub-window and an indication arrow of a next sub-window respectively on both sides of the first sub-window;
display the message editing window as the corresponding previous sub-window or next sub-window in response to the operation of selecting the sub-window by the user.

6. The mobile terminal according to claim 5, wherein the first input comprises at least a write sub-input of the target message; and
the first input response module (20) further comprises:
a write sub-input response unit, configured to display the target message in the message editing window in response to the write sub-input, wherein
in a process in which the user performs the write sub-input, a size of the display area of the message editing window is adjusted based on content of the target message written by the user until all content of the target message is displayed in the display area of the message editing window.

7. The mobile terminal according to claim 5, wherein the first input response module (20) comprises:
a sub-window writing unit, configured to obtain, in response to the first input, a target message written by the user in any sub-window of the message editing window.

8. The mobile terminal according to claim 5, wherein the mobile terminal is a dual-screen mobile terminal, and the mobile terminal comprises a first screen and a second screen; and
the second input response module (40) comprises:
a cross-screen moving unit, configured to control, in response to the second input, the message editing window to move from the first screen to a target sending window of the second screen; and
a window identifying unit, configured to identify the target sending window of the second screen.

## Patentansprüche

1. Nachrichtensendeverfahren, angewandt auf ein mobiles Endgerät und **dadurch gekennzeichnet, dass** es Folgendes umfasst:
Empfangen (S1) einer ersten Eingabe von einem Nutzer;
Erhalten (S2) einer von einem Nutzer in einem Nachrichtenbearbeitungsfenster geschriebenen Zielnachricht als Antwort auf die erste Eingabe, wobei das Nachrichtenbearbeitungsfenster eine Vielzahl von Unterfenstern umfasst und ein jedes Unterfenster der Vielzahl von Unterfenstern vom Nutzer genutzt wird, um eine unabhängige Zielnachricht zu schreiben, wobei die Zielnachricht eine zu sendende bearbeitbare Nachricht ist und die Zielnachricht im Nachrichtenbearbeitungsfenster angezeigt wird;
Empfangen (S3) einer zweiten Eingabe vom Nutzer;
Identifizieren (S4) eines Zielsendefensters, an dem der Nutzer das einzugehende Nachrichtenbearbeitungsfenster regelt, als Antwort auf die zweite Eingabe, und Senden (S5) der Zielnachricht an das Zielsendefenster,
wobei die erste Eingabe mindestens eine Anzeigeuntereingabe des Nachrichtenbearbeitungsfensters umfasst, und das Erhalten (S2) einer vom Nutzer in einem Nachrichtenbearbeitungsfenster geschriebenen Zielnachricht als Antwort auf die erste Eingabe Folgendes umfasst:
Erhalten (S21) des Nachrichtenbearbeitungsfensters als Antwort auf die Anzeigeuntereingabe; Durchführen (S22) einer Transparenzverarbeitung auf einem Anzeigebereich des Nachrichtenbearbeitungsfensters, um zu ermöglichen, dass der Anzeigebereich des Nachrichtenbearbeitungsfensters in einem transparenten Schwebezustand angezeigt wird, und Anzeigen (S23) des Nachrichtenbearbeitungsfensters im transparenten Schwebezustand,
wobei die erste Eingabe zudem einen Vorgang zum Auswählen eines Unterfensters durch den Nutzer umfasst und das Anzeigen (S23) des Nachrichtenbearbeitungsfensters Folgendes umfasst:
als Antwort auf die Anzeigeuntereingabe in der ersten Eingabe Anzeigen eines ersten Unterfensters des Nachrichtenbearbeitungsfensters auf einer aktuellen Schnittstelle und Anzeigen eines Angabepfeils eines vorherigen Unterfensters und eines Angabepfeils eines nächsten Unterfensters jeweils auf beiden Seiten des ersten Unterfensters;
Anzeigen des Nachrichtenbearbeitungsfensters als das entsprechende vorherige Unterfenster oder das nächste Unterfenster als Antwort auf den Vorgang zum Auswählen des Unterfensters durch den Nutzer.

2. Verfahren nach Anspruch 1, wobei die erste Eingabe mindestens eine Schreibuntereingabe der Zielnachricht umfasst und das Erhalten (S2) einer vom Nutzer in einem Nachrichtenbearbeitungsfenster geschriebenen Zielnachricht als Antwort auf die erste Eingabe Folgendes umfasst:
Anzeigen (S24) der Zielnachricht im Nachrichtenbearbeitungsfenster als Antwort auf die Schreibuntereingabe, wobei in einem Prozess, in dem der Nutzer die Schreibuntereingabe durchführt, eine Größe des Anzeigebereichs des Nachrichtenbearbeitungsfensters basierend auf dem Inhalt der vom Nutzer geschriebenen Zielnachricht angepasst wird, bis der vollständige Inhalt der Zielnachricht im Anzeigebereich des Nachrichtenbearbeitungsfensters angezeigt wird.

3. Verfahren nach Anspruch 1, wobei das Erhalten (S2) einer vom Nutzer in einem Nachrichtenbearbeitungsfenster als Antwort auf die erste Eingabe Folgendes umfasst:
Erhalten (S25) einer vom Nutzer in einem beliebigen Unterfenster des Nachrichtenbearbeitungsfensters geschriebenen Zielnachricht als Antwort auf die erste Eingabe.

4. Verfahren nach Anspruch 1, wobei das Verfahren auf ein mobiles Endgerät mit zwei Bildschirmen angewandt wird und das mobile Endgerät einen ersten Bildschirm und einen zweiten Bildschirm umfasst und das Identifizieren (S4) eines Zielsendefensters, an dem der Nutzer das einzugehende Nachrichtenbearbeitungsfenster regelt, als Antwort auf die zweite Eingabe Folgendes umfasst:
als Antwort auf die zweite Eingabe Regeln (S41) des Nachrichtenbearbeitungsfensters, sodass es sich vom ersten Bildschirm zu einem Zielsendefenster des zweiten Bildschirms bewegt, und Identifizieren (S42) des Zielsendefensters des zweiten Bildschirms.

5. Mobiles Endgerät, **dadurch gekennzeichnet, dass** es Folgendes umfasst:
ein erstes Eingabeempfangsmodul (10), das ausgelegt ist, um eine erste Eingabe von einem Nutzer zu empfangen;
ein erstes Eingabeantwortmodul (20), das ausgelegt ist, um eine von einem Nutzer in einem Nachrichtenbearbeitungsfenster geschriebene Zielnachricht als Antwort auf die erste Eingabe zu erhalten, wobei das Nachrichtenbearbeitungsfenster eine Vielzahl von Unterfenstern umfasst und ein jedes Unterfenster der Vielzahl von Unterfenstern vom Nutzer genutzt wird, um eine unabhängige Zielnachricht zu schreiben, wobei die Zielnachricht eine zu sendende bearbeitbare Nachricht ist und die Zielnachricht im Nachrichtenbearbeitungsfenster angezeigt wird;
ein zweites Eingabeempfangsmodul (30), das ausgelegt ist, um eine zweite Eingabe vom Nutzer zu empfangen;
ein zweites Eingabeantwortmodul (40), das ausgelegt ist, um ein Zielsendefenster, an dem der Nutzer das einzugehende Nachrichtenbearbeitungsfenster regelt, als Antwort auf die zweite Eingabe zu identifizieren,
und ein Sendemodul (50), das ausgelegt ist, um die Zielnachricht an das Zielsendefenster zu senden,
wobei die erste Eingabe mindestens eine Anzeigeuntereingabe des Nachrichtenbearbeitungsfensters umfasst und das erste Eingabeantwortmodul (20) Folgendes umfasst:
eine Anzeigeuntereingabeantworteinheit, die ausgelegt ist, um das Nachrichtenbearbeitungsfenster als Antwort auf die Anzeigeuntereingabe zu erhalten;
eine Verarbeitungseinheit, die ausgelegt ist, um eine Transparenzverarbeitung auf einem Anzeigebereich des Nachrichtenbearbeitungsfensters durchzuführen, um zu ermöglichen, dass der Anzeigebereich des Nachrichtenbearbeitungsfensters in einem transparenten Schwebezustand angezeigt wird, und eine Anzeigeeinheit, die ausgelegt ist, um das Nachrichtenbearbeitungsfenster im transparenten Schwebezustand anzuzeigen,
wobei die erste Eingabe zudem einen Vorgang zum Auswählen eines Unterfensters durch den Nutzer umfasst und die Verarbeitungseinheit zudem ausgelegt ist, um als Antwort auf die Anzeigeuntereingabe in der ersten Eingabe ein erstes Unterfensters des Nachrichtenbearbeitungsfensters auf einer aktuellen Schnittstelle anzuzeigen und einen Angabepfeil eines vorherigen Unterfensters und einen Angabepfeil eines nächsten Unterfensters jeweils auf beiden Seiten des ersten Unterfensters anzuzeigen;
das Nachrichtenbearbeitungsfenster als das entsprechende vorherige Unterfenster oder das nächste Unterfenster als Antwort auf den Vorgang zum Auswählen des Unterfensters durch den Nutzer anzuzeigen.

6. Mobiles Endgerät nach Anspruch 5, wobei die erste Eingabe mindestens eine Schreibuntereingabe der Zielnachricht umfasst und das erste Eingabeantwortmodul (20) zudem Folgendes umfasst:
eine Schreibuntereingabeantworteinheit, die ausgelegt ist, um die Zielnachricht im Nachrichtenbearbeitungsfenster als Antwort auf die Schreibuntereingabe anzuzeigen, wobei in einem Prozess, in dem der Nutzer die Schreibuntereingabe durchführt, eine Größe des Anzeigebereichs des Nachrichtenbearbeitungsfensters basierend auf dem Inhalt der vom Nutzer geschriebenen Zielnachricht angepasst wird, bis der vollständige Inhalt der Zielnachricht im Anzeigebereich des Nachrichtenbearbeitungsfensters angezeigt wird.

7. Mobiles Endgerät nach Anspruch 5, wobei das erste Eingabeantwortmodul (20) Folgendes umfasst:
eine Unterfensterschreibeinheit, die ausgelegt ist, um eine vom Nutzer in einem beliebigen Unterfenster des Nachrichtenbearbeitungsfensters geschriebene Zielnachricht als Antwort auf die erste Eingabe zu erhalten.

8. Mobiles Endgerät nach Anspruch 5, wobei das mobile Endgerät ein mobiles Endgerät mit zwei Bildschirmen ist und das mobile Endgerät einen ersten Bildschirm und einen zweiten Bildschirm umfasst und das zweite Eingabeantwortmodul (40) Folgendes umfasst:
eine bildschirmübergreifende Bewegungseinheit, die ausgelegt ist, um als Antwort auf die zweite Eingabe das Nachrichtenbearbeitungsfenster zu regeln, sodass es sich vom ersten Bildschirm zu einem Zielsendefenster des zweiten Bildschirms bewegt, und eine Fensteridentifizierungseinheit, die ausgelegt ist, um das Zielsendefenster des zweiten Bildschirms zu identifizieren.

## Revendications

1. Procédé d'envoi de message, appliqué à un terminal mobile et **caractérisé en ce qu'**il comprend :
recevoir (S1) une première entrée d'un utilisateur ;
obtenir (S2), en réponse à la première entrée, un message cible écrit par l'utilisateur dans une fenêtre d'édition de message ; dans lequel la fenêtre d'édition de message comprend une pluralité de sous-fenêtres, et chaque sous-fenêtre de la pluralité de sous-fenêtres est utilisée par l'utilisateur pour écrire un message cible indépendant ; dans lequel le message cible est un message éditable à envoyer, et le message cible est affiché dans la fenêtre d'édition de message ;
recevoir (S3) une seconde entrée de l'utilisateur ;
identifier (S4), en réponse à la seconde entrée, une fenêtre d'envoi cible dans laquelle l'utilisateur contrôle l'arrivée de la fenêtre d'édition de message ;
et envoyer (S5) le message cible à la fenêtre d'envoi cible ;
dans lequel la première entrée comprend au moins une sous-entrée d'affichage de la fenêtre d'édition de message ; et l'obtention (S2), en réponse à la première entrée, d'un message cible écrit par l'utilisateur dans une fenêtre d'édition de message comprend :
obtenir (S21) la fenêtre d'édition de message en réponse à la sous-entrée d'affichage ; effectuer (S22) un traitement de transparence sur une zone d'affichage de la fenêtre d'édition de message, pour permettre à la zone d'affichage de la fenêtre d'édition de message d'être affichée dans un état de survol transparent ; et
afficher (S23) la fenêtre d'édition de message dans l'état de survol transparent ;
dans lequel la première entrée comprend en outre une opération de sélection d'une sous-fenêtre par l'utilisateur, et l'affichage (S23) de la fenêtre d'édition de message comprend :
en réponse à la sous-entrée d'affichage dans la première entrée, afficher une première sous-fenêtre de la fenêtre d'édition de message sur une interface actuelle, et afficher une flèche d'indication d'une sous-fenêtre précédente et une flèche d'indication d'une sous-fenêtre suivante respectivement des deux côtés de la première sous-fenêtre ;
afficher la fenêtre d'édition de message en tant que sous-fenêtre précédente ou sous-fenêtre suivante correspondantes en réponse à l'opération de sélection de la sous-fenêtre par l'utilisateur.

2. Procédé selon la revendication 1, dans lequel la première entrée comprend au moins une sous-entrée d'écriture du message cible ; et l'obtention (S2), en réponse à la première entrée, d'un message cible écrit par l'utilisateur dans une fenêtre d'édition de message comprend en outre :
afficher (S24) le message cible dans la fenêtre d'édition de message en réponse à la sous-entrée d'écriture, dans lequel dans un processus dans lequel l'utilisateur effectue la sous-entrée d'écriture, une taille de la zone d'affichage de la fenêtre d'édition de message est ajustée en fonction du contenu du message cible écrit par l'utilisateur jusqu'à ce que tout le contenu du message cible soit affiché dans la zone d'affichage de la fenêtre d'édition de message.

3. Procédé selon la revendication 1, dans lequel l'obtention (S2), en réponse à la première entrée, d'un message cible écrit par l'utilisateur dans une fenêtre d'édition de message comprend :
obtenir (S25), en réponse à la première entrée, un message cible écrit par l'utilisateur dans n'importe quelle sous-fenêtre de la fenêtre d'édition de message.

4. Procédé selon la revendication 1, dans lequel le procédé est appliqué à un terminal mobile à double écran, et le terminal mobile comprend un premier écran et un second écran ; et l'identification (S4), en réponse à la seconde entrée, d'une fenêtre d'envoi cible dans laquelle l'utilisateur contrôle l'arrivée de la fenêtre d'édition de message comprend :
contrôler (S41), en réponse à la seconde entrée, la fenêtre d'édition de message pour passer du premier écran à une fenêtre d'envoi cible du second écran ; et
identifier (S42) la fenêtre d'envoi cible du second écran.

5. Terminal mobile, **caractérisé en ce qu'**il comprend :
un premier module de réception d'entrée (10), configuré pour recevoir une première entrée d'un utilisateur ;
un premier module de réponse d'entrée (20), configuré pour obtenir, en réponse à la première entrée, un message cible écrit par l'utilisateur dans une fenêtre d'édition de message ; dans lequel la fenêtre d'édition de message comprend une pluralité de sous-fenêtres, et chaque sous-fenêtre de la pluralité de sous-fenêtres est utilisée par l'utilisateur pour écrire un message cible indépendant ; dans lequel le message cible est un message éditable à envoyer, et le message cible est affiché dans la fenêtre d'édition de message ;
un second module de réception d'entrée (30), configuré pour recevoir une seconde entrée de l'utilisateur ; un second module de réponse d'entrée (40), configuré pour identifier, en réponse à la seconde entrée, une fenêtre d'envoi cible dans laquelle l'utilisateur contrôle l'arrivée de la fenêtre d'édition de message ;
et un module d'envoi (50), configuré pour envoyer le message cible à la fenêtre d'envoi cible ;
dans lequel la première entrée comprend au moins une sous-entrée d'affichage de la fenêtre d'édition de message ; et le premier module de réponse d'entrée (20) comprend :
une unité de réponse de sous-entrée d'affichage, configurée pour obtenir la fenêtre d'édition de message en réponse à la sous-entrée d'affichage ;
une unité de traitement, configurée pour effectuer un traitement de transparence sur une zone d'affichage de la fenêtre d'édition de message, pour permettre à la zone d'affichage de la fenêtre d'édition de message d'être affichée dans un état de survol transparent ; et
une unité d'affichage, configurée pour afficher la fenêtre d'édition de message dans l'état de survol transparent ;
dans lequel la première entrée comprend en outre une opération de sélection d'une sous-fenêtre par l'utilisateur, et l'unité de traitement est en outre configurée pour :
en réponse à la sous-entrée d'affichage dans la première entrée, afficher une première sous-fenêtre de la fenêtre d'édition de message sur une interface actuelle, et afficher une flèche d'indication d'une sous-fenêtre précédente et une flèche d'indication d'une sous-fenêtre suivante respectivement des deux côtés de la première sous-fenêtre ;
afficher la fenêtre d'édition de message en tant que sous-fenêtre précédente ou sous-fenêtre suivante correspondante en réponse à l'opération de sélection de la sous-fenêtre par l'utilisateur.

6. Terminal mobile selon la revendication 5, dans lequel la première entrée comprend au moins une sous-entrée d'écriture du message cible ; et le premier module de réponse d'entrée (20) comprend en outre :
une unité de réponse de sous-entrée d'écriture, configurée pour afficher le message cible dans la fenêtre d'édition de message en réponse à la sous-entrée d'écriture, dans lequel dans un processus dans lequel l'utilisateur effectue la sous-entrée d'écriture, une taille de la zone d'affichage de la fenêtre d'édition de message est ajustée en fonction du contenu du message cible écrit par l'utilisateur jusqu'à ce que tout le contenu du message cible soit affiché dans la zone d'affichage de la fenêtre d'édition de message.

7. Terminal mobile selon la revendication 5, dans lequel le premier module de réponse d'entrée (20) comprend :
une unité d'écriture de sous-fenêtre, configurée pour obtenir, en réponse à la première entrée, un message cible écrit par l'utilisateur dans n'importe quelle sous-fenêtre de la fenêtre d'édition de message.

8. Terminal mobile selon la revendication 5, dans lequel le terminal mobile est un terminal mobile à double écran, et le terminal mobile comprend un premier écran et un second écran ; et le second module de réponse d'entrée (40) comprend :
une unité de déplacement entre écrans, configurée pour contrôler, en réponse à la seconde entrée, la fenêtre d'édition de message pour passer du premier écran à une fenêtre d'envoi cible du second écran ; et une unité d'identification de fenêtre, configurée pour identifier la fenêtre d'envoi cible du second écran.
